**Europäisches Patentamt**

**European Patent Office**

**Office européen des brevets**

(19)

(11) Veröffentlichungsnummer: **0 225 591**
**B1**

(12) **EUROPÄISCHE PATENTSCHRIFT**

(45) Veröffentlichungstag der Patentschrift: **14.03.90**

(51) Int. Cl.⁵: **F 16 M 11/04**

(21) Anmeldenummer: **86116776.5**

(22) Anmeldetag: **02.12.86**

(54) **Kamerastativ.**

(30) Priorität: **09.12.85 DE 3543427**

(43) Veröffentlichungstag der Anmeldung:
**16.06.87 Patentblatt 87/25**

(45) Bekanntmachung des Hinweises auf die
Patenterteilung:
**14.03.90 Patentblatt 90/11**

(84) Benannte Vertragsstaaten:
**DE ES FR GB IT SE**

(56) Entgegenhaltungen:
**DE-U- 8 420 523**
**FR-A- 470 177**
**GB-A- 270 592**
**US-A- 2 896 901**

(73) Patentinhaber: **CULLMANN
HANDELSGESELLLSCHAFT FÜR
VERBRAUCHSGÜTER M.B.H.
Waldstrasse 12
D-8506 Langenzenn-Laubendorf (DE)**

(72) Erfinder: **Cullmann, Wolfgang
Marienbader Strasse 3
D-8506 Langenzenn (DE)**

(74) Vertreter: **LOUIS, PÖHLAU, LOHRENTZ &
SEGETH
Kesslerplatz 1 Postfach 3055
D-8500 Nürnberg-1 (DE)**

Courier Press, Leamington Spa, England.

**Beschreibung**

Die Erfindung betrifft ein Kamerastativ mit einem Aufnahmeteil für einen Stativkopf, der auf dem Aufnahmeteil mittels einer zwischen dem Stativkopf und dem Aufnahmeteil vorgesehenen Verbindungseinrichtung befestigbar ist, wobei die Verbindungseinrichtung zwei Abschnitte aufweist, von denen der erste Abschnitt zum Einstecken in eine Ausnehmung im Aufnahmeteil und zur Lögerung in der Ausnehmung vorgesehen ist, und der mit dem ersten Abschnitt eine Einheit bildende zweite Abschnitt mindestens einen Gewindeansatz aufweist, der in eine im Stativkopf vorgesehene Gewindebohrung einschraubbar ist.

Ein derartiges Kamerastativ ist aus der FR-A 470 177 bekannt. Dort weist der erste Abschnitt der Verbindungseinrichtung einen kreisförmigen Querschnitt auf, so dass eine verdrehfeste Lagerung der Verbindungseinrichtung in der Ausnehmung im Aufnahmeteil nur bedingt möglich ist. Ausserdem ist bei diesem Kamerastativ die Verbindungseinrichtung nur mit einem einzigen Gewindeabschnitt ausgebildet, so dass nur Stativköpfe mit einem entsprechenden Innengewindeabschnitt an diesem bekannten Kamerastativ befestigbar sind.

Im DE-GM 84 20 523 ist ein Kamerastativ beschrieben, bei dem die zwischen dem Stativkopf und dem Aufnahmeteil vorgesehene Verbindungseinrichtung einen am Stativkopf befestigten Ansatz mit einem von der Kreisform abweichenden Querschnitt und das Aufnahmeteil für den Stativkopf eine Ausnehmung aufweist, deren Querschnitt an den Quereschnitt des Ansatzes des Stativkopfes angepasst ist. Bei diesem Ansatz kann es sich bspw. um einen Mehrkantansatz handeln, dem eine mehrkantige Ausnehmung im Aufnahmeteil des Kamerastativs entspricht.

Die GB-A 270 592 beschreibt ein Kamerastativ mit einem Element, das einen mittigen Abschnitt dreieckigen Querschnittprofils und zwei Abschnitte mit Aussengewinde aufweist, wobei die beiden Aussengewindeabschnitte vom mittigen Abschnitt in entgegengesetzte Richtungen wegstehen. Die beiden Aussengewindeabschnitte weisen voneinander verschiedene Gewindedurchmesser auf. Der mittige Abschnitt dieses Elementes ist zwischen zentralen Teilen festgehalten, welche eine dreieckförmige Öffnung bilden. Diese Öffnung wird durch eine Boden- und eine Deckelscheibe abgeschlossen, wobei Muttern auf die Aussengewindeabschnitte aufgeschraubt sind.

Aus der US-A 28 690 901 ist eine Befestigungskonsole bekannt, die eine in einer ersten (vertikalen) Raumrichtung vorgesehene erste Befestigungsschraube aufweist, die mit einem Befestigungselement verschraubbar ist, um zwei Befestigungsschellen an einem Grundelement arretieren zu können. Die beiden Befestigungsschellen sind mittels eines zweiten Schraubelementes miteinander verbindbar, das in einer zur ersten Raumrichtung senkrechten zweiten (horizontalen) Raumrichtung ausgerichtet ist. Im miteinander verbundenen Zustand der beiden Befestigungsschellen ist zwischen diesen ein Hohlraum festgelegt, in welchem das mit der ersten Befestigungsschraube verschraubbare Befestigungselement gehaltert ist. Zwischen den beiden Befestigungsschellen ist ausserdem ein Gehäuseteil angeordnet, das mittels der zweiten Befestigungsschraube zwischen den Befestigungsschellen festlegbar bzw. festgelegt ist.

Durch die unterschiedlichen Ausbildungen bekannter Kamerastative einerseits mit einem einen Gewindezapfen aufweisenden Aufnahmeteil und einer im Stativkopf vorgesehenen Gewindebohrung, und andererseits mit einem einen mehrkantigen Ansatz aufweisenden Stativkopf mit einem eine mehrkantige Ausnehmung aufweisenden Aufnahmeteil ist es bislang nicht möglich, ein Aufnahmeteil eines Kamerastatives, das bspw. eine mehrkantige Ausnehmung aufweist, mit einem Stativkopf zu kombinieren, der mit einer Gewindebohrung versehen ist, bzw. ein Kamerastativ mit einem einen Gewindezapfen aufweisenden Aufnahmeteil mit einem Stativkopf zu kombinieren, der mit einem mehrkantigen Ansatz ausgebildet ist.

Deshalb liegt der Erfindung die Aufgabe zugrunde, ein Kamerastativ der eingangs genannten Art zu schaffen, bei dem jedes beliebige Aufnahmeteil mit jedem beliebigen Stativkopf verbunden werden kann.

Diese Aufgabe wird erfindungsgemäss dadurch gelöst, dass der erste Abschnitt der Verbindungseinrichtung und die Ausnehmung im Aufnahmeteil zur verdrehfesten Lagerung der Verbindungseinrichtung in der Ausnehmung einen mehreckigen Querschnitt aufweisen, und dass vom ersten Abschnitt der Verbindungseinrichtung zwei zweite Abschnitte in entgegengesetzte Richtungen wegstehen, die mit der Mittelachse der Verbindungseinrichtung fluchten, wobei die beiden zweiten Abschnitte Gewindeansätze mit unterschiedlichen Gewinden sind.

Durch eine derartige Ausbildung ist es möglich, das Aufnahmeteil mit einer Ausnehmung auszubilden, in der entweder der an den Stativkopf angeformte, vorzugsweise mehrkantig ausgebildete Ansatz unmittelbar eingesteckt und verdrehfest gelagert werden kann, oder in welche die Verbindungseinrichtung mit ihrem ersten Abschnitt eingesteckt und verdrehfest gelagert wird, so dass auf dem mit dem ersten Abschnitt eine Einheit bildenden zweiten Abschnitt, der einen Gewindeansatz aufweist, ein mit einer Gewindebohrung versehener Stativkopf aufgeschraubt werden kann. Durch eine solche Verbindungseinrichtung ist das Kamerastativ, dessen Aufnahmeteil mit einer zur verdrehfesten Lagerung der Verbindungseinrichtung oder eines Stativkopfes vorgesehenen Ausnehmung sowohl mit einem Stativkopf kombinierbar, der eine Gewindebohrung aufweist, als auch mit einem Stativkopf, der mit einem vorzugsweise mehrkantig ausgebildeten Ansatz versehen ist. Selbstverständlich muss zur verdrehsicheren Lagerung der Verbindungseinrichtung der erste Abschnitt nicht mehrkantig ausgebildet sein, sondern es ist bspw. auch möglich, den ersten Abschnitt der Verbindungseinrichtung oval oder mit einem kreisrunden Querschnitt auszubilden und dieses wellenförmige Teil zur Verdrehsicherung mit einer sogen. Feder zu versehen.

Ein erster Abschnitt der Verbindungseinrichtung mit einem mehreckigen Querschnitt ist einfach herstellbar und ergibt eine ausgezeichnete Verdrehsicherheit der Verbindungseinrichtung in Bezug zum Aufnahmeteil.

Dadurch, dass vom ersten Abschnitt der Verbindungseinrichtung zwei zweite Abschnitte in entgegengesetzte Richtungen wegstehen, die mit der Mittelachse der Verbindungseinrichtung fluchten, wobei diese beiden zweiten Abschnitte vorzugsweise Gewindeansätze mit unterschiedlichen Gewinden aufweisen, ist es möglich, Stativköpfe mit einer Gewindebohrung der einen genormten Gewindegrösse sowie Stativköpfe mit der zweiten genormten Gewindegrösse der Gewindebohrung am mit einer Ausnehmung versehenen Aufnahmeteil zu befestigen. Die in den Stativköpfen vorgesehenen Gewindebohrungen weisen üblicherweise genormte Gewinde auf, die in zwei Grössen vorliegen können. Diesen beiden Grössen der genormten Gewindebohrungen entsprechen die Gewinde der beiden Gewindeansätze der Verbindungseinrichtung.

Es hat sich als vorteilhaft erwiesen, wenn die Ausnehmung im Aufnahmeteil zur Begrenzung der Einstecktiefe der Verbindungseinrichtung einen Anschlag aufweist. Dieser Anschlag kann bspw. als Federring ausgebildet sein, der im Bereich des Überganges zwischen der vorzugsweise mehrkantig ausgebildeten Ausnehmung im Aufnahmeteil und einer sich an die mehrkantige Ausnehmung unmittelbar anschliessenden Bohrung, die einen grösseren Durchmesser aufweist als der lichte Abstand der mehrkantigen Ausnehmung, angeordnet ist. Durch eine derartige Ausbildung ist der mehrkantige Ansatz bspw. in einem Fräsvorgang einfach herstellbar und ergibt sich mit einfachen Mitteln ein genau definierter Anschlag für den ersten Abschnitt der Verbindungseinrichtung.

Im ersten Abschnitt der Verbindungseinrichtung ist vorzugsweise eine Ausnehmung vorgesehen, die sich durch eine Gewindebohrung im Aufnahmeteil fortsetzt, und in die ein Gewindestift einschraubbar ist. Dieser in die Ausnehmung im ersten Abschnitt der Verbindungseinrichtung einschraubbare Gewindestift dient ebenfalls dazu, die Verbindungseinrichtung gegen Verdrehung relativ zum Aufnahmeteil zu sichern. Deshalb wäre es auch möglich, den ersten Abschnitt der Verbindungseinrichtung einfach zylindrisch auszubilden.

Die Ausnehmung im ersten Abschnitt der Verbindungseinrichtung kann von innen nach aussen konisch erweitert ausgebildet sein und eine Achse aufweisen, die gegen die Achse der im Aufnahmeteil vorgesehenen Gewindebohrung parallel versetzt ist, wobei die Achse der im Aufnahmeteil vorgesehenen Gewindebohrung vom Stativkopf weiter entfernt ist als die Achse der im ersten Abschnitt vorgesehenen Ausnehmung im in die Ausnehmung des Aufnahmeteils eingesteckten Zustand der Verbindungseinrichtung, und der Gewindestift kann an seinem inneren Vorderende nach vorne konisch verjüngt ausgebildet sein und in die konisch erweiterte Ausnehmung im ersten Abschnitt der Verbindungseinrichtung hineinragen, wobei die Konizität des Vorderendes der Konizität der Ausnehmung im ersten Abschnitt der Verbindungseinrichtung entspricht.

Durch die versetzte Anordnung der Achse des Gewindestiftes in Bezug zur Achse der sich konisch erweiternden Ausnehmung im ersten Abschnitt der Verbindungseinrichtung wird die Verbindungseinrichtung bei einem Einschrauben des Gewindestiftes in die konische Ausnehmung im ersten Abschnitt infolge der Keilwirkung der beiden Konen in axialer Richtung vom Stativkopf weg und gegen den vorzugsweise federnd ausgebildeten Anschlag bewegt. Dabei wird gleichzeitig der Stativkopf auf dem Aufnahmeteil fixiert. Umgekehrt wird beim Ausschrauben des Gewindestiftes aus der Ausnehmung im ersten Abschnitt der Verbindungseinrichtung heraus die Verbindungseinrichtung durch die federnden Eigenschaften des Anschlages vom Aufnahmeteil gelöst, bzw. kann der Stativkopf vom Aufnahmeteil entfernt weden, wenn der Gewindestift aus der Ausnehmung im ersten Abschnitt der Verbindungseinrichtung vollständig heausgeschraubt ist.

Als zweckmässig hat es sich erwiesen, wenn das Aufnahmeteil und der Stativkopf an den einander zugewandten Berührungsflächen zur Sicherung gegen Verdrehung des Stativkopfes relativ zum Aufnahmeteil Zahnkränze aufweisen. Durch diese Zahnkränze wird eine Verdrehung des auf dem Aufnahmeteil befestigten Stativkopfes sicher verhindert, wenn eine auf dem Stativkopf montierte Kamera während der Aufnahmebzw. Aufzeichnungsarbeit in Bezug zum Kamerastativ verdreht wird.

Ein Ausführungsbeispiel des erfindungsgemässen Kamerastativs ist in der Zeichnung dargestellt und wird nachfolgend beschrieben. Es zeigt:

Fig. 1 ein Kamerastativ mit einem Aufnahmeteil, von dem Standbeine wegstehen, und mit einem Stativkopf,

Fig. 2 eine halbseitig geschnittene Explosionsdarstellung des Aufnahmeteils und des Stativkopfes, die mittels einer Verbindungseinrichtung miteinander verbindbar sind,

Fig. 3 eine Ansicht des Stativkopfes in Blickrichtung des Pfeiles III aus Fig. 2,

Fig. 4 eine Ansicht des Aufnahmeteils in Blickrichtung des Pfeiles IV aus Fig. 2, und

Fig. 5 einen Schnitt durch die Verbindungseinrichtung entlang der Schnittlinie V-V aus Fig. 2.

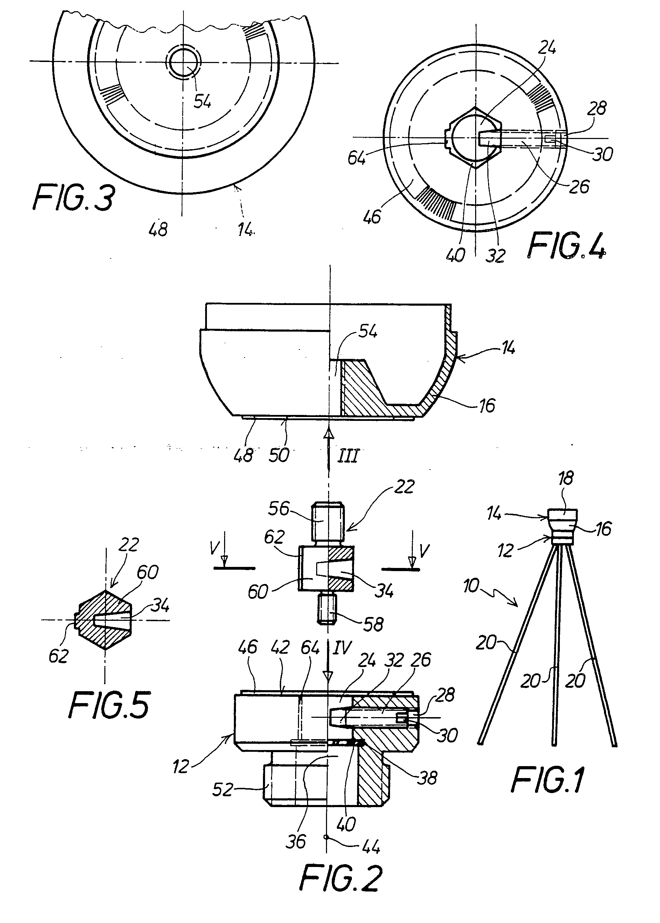

Figur 1 zeigt ein Kamerastativ 10 in einem stark verkleinerten Maßstab. Das Kamerastativ 10 weist ein Aufnahmeteil 12 und einen auf dem Aufnahmeteil befestigten Stativkopf 14 auf. Der Stativkopf 14 weist ein Unterteil 16 und ein auf dem Unterteil 16 drehbar gelagertes Oberteil 18 auf, auf welchem eine Kamera befestigbar ist.

Vom Aufnahmeteil 12 ragen Standbeine 20 nach unten, die teleskopartig ausgebildet und auf eine gewünschte Länge einstellbar sind.

Figur 2 zeigt das Aufnahmeteil 12, das Unterteil 16 des Stativkopfes 14, sowie eine Verbindungseinrichtung 22, die zwischen dem Aufnahmeteil 12 und dem Stativkopf 14 angeordnet ist, und die den Stativkopf 14 auf dem Aufteil. 12 verdrehfest fixiert. Das Aufnahmeteil 12 weist eine zentrale mehrkantige Ausnehmung 24 auf (sh. auch Figur 4), in die ein Gewindestift 26 durch eine Gewindebohrung 28 im Aufnahmeteil 12 hindurch einschraubbar ist. Zu diesem Zweck weist der Gewindestift 26 an seinem radial äußeren Ende einen Schraubenzieherschlitz oder eine mehrkantige Einsenkung 30 auf. Am radial inneren Vorderende 32 ist der Gewindestift 26 konisch ausgebildet. Die Konizität des Vorderendes 32 des Gewindestiftes 26 entspricht der Konizität der Ausnehmung 34 in der Verbindungseinrichtung 22 (sh. auch Fig. 5).

Mit der mehrkantigen Ausnehmung 24 fluchtet eine Bohrung 36, die einen größeren Durchmesser aufweist als die lichte Weite der mehrkantigen Ausnehmung 24 im Aufnahmeteil 12. Durch den größeren Durchmesser der Bohrung 36 ist die mehrkantige Ausnehmung 24 bspw. in einem Fräsarbeitsgang einfach herstellbar. Der Übergangsbereich zwischen der mehrkantigen Ausnehmung 24 und der Bohrung 36 ist mit einer umlaufenden Rille 38 ausgebildet, in der ein als Anschlag für die Verbindungseinrichtung 22 dienender Federring 40 angeordnet ist. Der Federring 40 weist einen Innendurchmesser auf, der gleich oder vorzugsweie kleiner ist als die lichte Weite der mehrkantigen Ausnehmung (sh. auch Fig. 4).

Auf der dem Stativkopf 14 zugewandten Oberseite 42 des Aufnahmeteiles 12 ist ein zur Mittelachse 44 konzentrischer Zahnkranz 46 vorgesehen (sh. auch Fig. 4). Diesem Zahnkranz 46 entspricht ein Zahnkranz 48 auf der dem Aufnahmeteil 12 zugewandten Unterseite 50 des Unterteiles 16 des Stativkopfes 14 (sh. auch Fig. 3). In Fig. 2 ist mit der Bezugsziffer 52 ein Ansatz des Aufnahmeteiles 12 bezeichnet, der mit einem Außengewinde ausgebildet ist. Mit diesem Gewindeansatz 52 kann das Aufnahmeteil 12 in ein mit den Standbeinen 20 (sh. Fig. 1) verbundenes Unterteil des Aufnahmeteiles 12 eingeschraubt werden.

Mit der Bezugsziffer 54 ist in Fig. 2 eine Gewindebohrung im Unterteil 16 des Stativkopfes 14 bezeichnet. Diese Gewindebohrung 54 weist ein genormtes Gewinde auf, wobei bei derartigen Stativköpfen 14 zwei Gewindegrößen üblich sind. Aus diesem Grunde weist die Verbindungseinrichtung 22 zwei Gewindeansätze 56 und 58 auf, die von gegenüberliegenden Seiten eines ersten Abschnittes 60 der Verbindungseinrichtung 22 in entgegengesetzte Richtungen wegstehen. Diese den zweiten Abschnitt der Verbindungseinrichtung 22 bildenden Gewindeansätze 56 und 58 sind zur Mittelachse 44 koaxial angeordnet, so daß der Stativkopf 14 auf dem Aufnahmeteil 12 mittig fixierbar ist. Wie auch aus Fig. 5 ersichtlich ist, ist der erste Abschnitt 60 der Verbindungseinrichtung 22 mehrkantig ausgebildet. Er weist an der der konischen Ausnehmung 34 gegenüberliegenden Fläche einen Ansatz 62 auf, der an eine in axialer Richtung verlaufende Ausnehmung 64 in der mehrkantigen Ausnehmung 24 des Aufnahmeteils 12 formmäßig angepaßt ist. Durch den Ansatz 62 bzw. durch die Ausnehmung 64 ergibt sich eine derartige Orientierung der Verbindungseinrichtung 22 in Bezug zum Aufnahmeteil 12, daß der Gewindestift 26 mit seinem Vorderende 32 stets nur mit der Fläche des ersten Abschnittes 60 der Verbindungseinrichtung 22 in Berührung kommen kann, die die konische . Ausnehmung 34 aufweist.

## Patentansprüche

1. Kamerastativ (10) mit einem Aufnahmeteil (12) für einen Stativkopf (14), der auf dem Aufnahmeteil mittels einer zwischen dem Stativkopf (14) und dem Aufnahmeteil (12) vorgesehenen Verbindungseinrichtung (22) befestigbar ist, wobei die Verbindungseinrichtung (22) zwei Abschnitte (60; 56, 58) aufweist, von denen der erste Abschnitt (60) zum Einstecken in eine Ausnehmung (24) im Aufnahmeteil (12) und zur Lagerung in der Ausnehmung (24) vorgesehen ist, und der mit dem ersten Abschnitt (60) eine Einheit bildende zweite Abschnitt mindestens einen Gewindeansatz (56, 58) aufweist, der in eine im Stativkopf (14) vorgesehene Gewindebohrung (54) einschraubbar ist, dadurch gekennzeichnet, dass der erste Abschnitt (60) der Verbindungseinrichtung (22) und die Ausnehmung (24) im Aufnahmeteil (12) zur verdrehfesten Lagerung der Verbindungseinrichtung (22) in der Ausnehmung (24) einen mehreckigen Querschnitt aufweisen, und dass vom ersten Abschnitt (60) der Verbindungseinrichtung (22) zwei zweite Abschnitte (56, 58) in entgegengesetzte Richtungen wegstehen, die mit der Mittelachse (44) der Verbindungseinrichtung (22) fluchten, wobei die beiden zweiten Abschnitte (56, 68) Gewindeansätze mit unterschiedlichen Gewinden sind.

2. Kamerastativ nach Anspruch 1, dadurch gekennzeichnet, dass die Ausnehmung (24) im Aufnahmeteil (12) zur Begrenzung der Einstecktiefe der Verbindungseinrichtung (22) einen Anschlag (40) aufweist.

3. Kamerastativ nach Anspruch 1 oder 2, dadurch gekennzeichnet, dass im ersten Abschnitt (60) der Verbindungseinrichtung (22) eine Ausnehmung (34) vorgesehen ist, die sich durch eine Gewindebohrung (28) im Aufnahmeteil (12) fortsetzt, und in die ein Gewindestift (26) einschraubbar ist.

4. Kamerastativ nach Anspruch 3, dadurch gekennzeichnet, dass die Ausnehmung (34) im ersten Abschnitt (60) der Verbindungseinrichtung (22) von innen nach aussen konisch erweitert ausgebildet ist und eine Achse aufweist, die gegen die Achse der im Aufnahmeteil (12) vorgesehenen Gewindebohrung (28) parallel versetzt ist, wobei die Achse der im Aufnahmeteil (12) vorgesehenen Gewindebohrung (28) vom Stativkopf (14) weiter entfernt ist als die Achse der im ersten Abschnitt (60) vorgesehenen Ausnehmung (34) im in die Ausnehmung (24) des Aufnahmeteils (12) eingesteckten Zustand der Verbindungseinrichtung (22), und dass der Gewindestift (26) an seinem inneren Vorderende (32) nach vorne konisch verjüngt ausgebildet ist und in die konisch erweiterte Ausnehmung (34) im ersten Abschnitt (60) der Verbindungseinrichtung (22) hineinragt, wobei die Konizität des Vorderendes (32) der Konizität der Ausnehmung (34) im ersten Abschnitt (60) der Verbindungseinrichtung (22) entspricht.

5. Kamerastativ nach wenigsens einem der vorhergehenden Ansprüche dadurch gekennzeichnet, dass das Aufnahmeteil (12) und der Stativkopf (14) an den einander zugewandten Berührungsflächen (42, 50) zur Sicherung gegen Verdrehungen des Stativkopfes (14) relativ zum Aufnahmeteil (12) Zahnkränze (46, 48) aufweisen.

## Revendications

1. Support de caméra (10) comportant une partie réceptrice (12) destinée à une tête support (14), laquelle y est fixée au moyen d'un dispositif de liaison (22) intermédiaire comprenant deux portions (60, 58, 56), la première (60) étant destinée à permettre l'insertion et le positionnement dans un évidement (24) de la partie réceptrice (12), alors que la seconde portion qui est d'une seule pièce avec la première (60) comporte au moins un filetage (55, 58) qui est vissable dans un taraudage (54) prévu à cet effet dans la tête support (14), et est caractérisé en ce que la première portion (60) dudit dispositif de liaison (22) ainsi que l'évidement (24) de la partie réceptrice (12) présentent une section transversale polygonale destinée à empêcher tout mouvement rotatif relatif entre les deux pièces (22) et (24), et en ce que ledit dispositif de liaison (22) comporte deux deuxièmes portions (56, 58) se développant de part et d'autre de la portion centrale (60), suivant le même axe central, ces deux portions étant par ailleurs filetées avec des pas de filetage différents.

2. Support de caméra (10) selon la revendication 1, caractérisé en ce que l'évidement (24) de la partie réceptrice (12) comporte un butoir (40) destiné à limiter la profondeur d'insertion du dispositif de liaison (22).

3. Support de caméra (10) selon les revendications 1 ou 2, caractérisé en ce que le dispositif de liaison (22) comporte un évidement (34) situé dans la première portion (60), qui se place en regard d'un trou taraudé (28) dans la partie réceptrice (12), et est prévu pour visser une goupille filetée (26).

4. Support de caméra selon la revendication 3, caractérisé en ce que l'évidement (45) de la première portion (60) du dispositif de liaison (22) a une forme conique s'évasant de l'intérieur vers l'extérieur, son axe étant parallèle à l'axe du taraudage (28) pratiqué dans la pièce réceptri'ce (12), l'axe de ce dernier étant placé plus loin de la tête support (14) que celui de l'évidement (34) de la portion (60) lorsque le dispositif de liaison (22) est inséré dans l'évidement (24) de la partie réceptrice (12), et en ce que la goupille filetée (26) a son extrémité avant (32) rétrécie en forme de cône destiné à s'insérer dans la partie conique de la première portion (60) du dispositif de liaison (22), les deux portions de cônes ainsi définies se correspondant exactement.

5. Support de caméra selon au moins l'une des revendications précédentes, caractérisé en ce que la partie réceptrice (12) et la tête support (14) présentent sur leurs surfaces de contact conjointes (42, 50) des couronnes crantées (46, 48) destinées à empêcher tout mouvement relatif de rotation.

## Claims

1. A camera stand (10) with a mounting component (12) for a tripod head (14) which can be mounted on the mounting component by means of a connector device (22) provided between the tripod head (14) and the mounting component (12), the connector device (22) having two parts (60; 56, 58) the first part (60) whereof is intended for insertion in a recess (24) in the mounting component (12) and for mounting in the recess (24), and the second part forming a unit with the first part (60) having at least one threaded attachment (56, 58) which can be screwed into a tapped hole (54) provided in the tripod head (14), characterized in that the first part (60) of the connector device (22) and the recess (24) in the mounting component (12) have a polygonal cross-section for securing the mounting of the connector device (22) in the recess (24) against rotation, and in that there project from the first part (60) of the connector device (22) two second parts (56, 58) in opposite directions, which are aligned with the median axis (44) of the connector device (22), the two second parts (56, 58) being threaded attachments with different threads.

2. A camera stand according to claim 1, characterized in that the recess (24) has a stop (40) in the mounting component (12) for limiting the insertion depth of the connector device (22).

3. A camera stand according to claim 1 or 2, characterized in that provision is made in the first part (60) of the connector device (22) for a recess (34) continued through a tapped hole (28) in the mounting component (12) and into which a threaded pin (26) can be screwed in.

4. A camera stand according to claim 3, characterized in that the recess (34) in the first part (60) of the connector device (22) has a conical shape flaring from the inside outwards and having an axis which is offset parallel to the axis of the tapped hole (28) provided in the mounting component (12), the axis of the tapped hole (28) provided in the mounting component (12) being remoter from the tripod head (14) than the axis of the recess (34) provided in the first part (60) when the connector device (22) is inserted into the recess (24) of the mounting component (12), and in that the threaded pin (26) has a shape tapering conically forward at its inner front end (32) and extends into the conically flaring recess (34) in the first part (60) of the connector device (22), the conicity of the front end (32) corresponding to the conicity of the recess (34) in the first part (60) of the connector device (22).

5. A camera stand according to at least one of the preceding claims, characterized in that the mounting component (12) and the tripod head (14) have on their contact surfaces (42, 50) facing each other toothed rims (46, 48) for securing the tripod head (14) against rotation relative to the mounting component (12).

FIG.3

54

48    14.

FIG.4

24

28

30

26

64

46

40   32

54

14

16

48   50   III

22

56

62

34

60

58

22

60

34

62

FIG.5

46   42   64   IV

24   32   26

28

30

38

12

52

36   40

44

FIG.2

18

14

16

12

10

20

20   20

FIG.1

1